# EUROPEAN PATENT APPLICATION

(11) **EP 1 686 567 A2**
(43) Date of publication of application: **02.08.2006**
(21) Application number: 06250496.4
(22) Date of filing: 30.01.2006

(54) **Signal processing circuit, content control apparatus, content control method and recording medium in or on which content control program is stored**

(30) Priority: 31.01.2005 JP 2005024354
(71) Applicant: SONY CORPORATION, Tokyo 141 (JP)
(72) Inventor: Hara, Kazuhiro c/o Sony Corporation, Tokyo 141 (JP); Inoue, Hiraku c/o Sony Corporation, Tokyo 141 (JP); Oishi, Tsurayuki c/o Sony Corporation, Tokyo 141 (JP); Ezura, Yuichi c/o Sony Corporation, Tokyo 141 (JP); Yoshimura, Koji c/o Sony Corporation, Tokyo 141 (JP); Kimura, Manabu c/o Sony Corporation, Tokyo 141 (JP)
(74) Representative: Leppard, Andrew John

(57) **Abstract**

A signal processing circuit and apparatus is disclosed which can prevent illegal utilization of content data with a higher degree of certainty. A hardware module controls utilization of content data based on right information of the content data. A nonvolatile memory stores a first check value for checking the compatibility of an apparatus identifier transferred from an apparatus in which the hardware module is incorporated and a second check value for checking the compatibility of the right information of the content data. The hardware module checks the compatibility of the transferred apparatus identifier based on the apparatus identifier and the first check value, checks the compatibility of the right information in response to the right information and the second check value and controls the utilization of the content data based on the right information in response to results of the checks.

## Description

This invention relates to a signal processing circuit, a content control apparatus, a content control method and a recording medium in or on which a content control program is stored and can be applied suitably, for example, to a content reproduction apparatus for reproducing content data.

In recent years, a content reproduction apparatus which acquires content data through the Internet from a server of a content provider who provides content data such as sound data and reproduces the acquired content data has been and is being popularized.

Usually, content data provided from a content provider in this manner are coordinated with right information indicative of whether or not a person who tries to use the content data has the right of utilizing the content data legally in order to protect the benefit to the owner of the copyright of the content data. Incidentally, one of the substances of a particular right indicated by the right information is the number of times by which the content data can be reproduced.

After a content reproduction apparatus acquires content data and coordinated right information from a

After a content reproduction apparatus acquires content data and coordinated right information from a server of a content provider, it uses a predetermined calculation method of a one-way function or the like to calculate a right information check value to be used in order to check whether or not the right information is in a rewritten or falsified state. Then, the content reproduction apparatus stores the calculated right information check value into a data storage medium (for example, a hard disk) provided therein together with the acquired content data and right information.

Incidentally, such a content reproduction apparatus as described above is configured such that it calculates a right information check value from such right information as described hereinabove using a predetermined calculation method in accordance with a right processing module (software) stored in advance in the data storage medium provided therein. Since the predetermined calculation method is concealed in the right processing module, a process in which the predetermined calculation method is used can be executed only by the content reproduction apparatus in which the right processing module is incorporated. It is to be noted that, in the description given below, a right processing module implemented by software is referred to as software right processing module.

Thereafter, for example, if a reproduction operation for reproducing content data stored in a data storage medium is performed, then the content reproduction apparatus first executes a right information rewriting check process of checking whether or not right information coordinated with the content data is in a rewritten state in accordance with the software right processing module stored in the data storage medium.

In particular, in the right information rewriting check process, the content reproduction apparatus executes a calculation for the right information coordinated with the content data using such a predetermined calculation method as described above. Then, the content reproduction apparatus compares the calculation value calculated by the calculation with the right information check value stored in the data storage medium. Then, if the content reproduction apparatus recognizes as a result of the comparison that the calculation value and the right information check value coincide with each other, then the content reproduction apparatus decides that the right information is not in a rewritten state. However, if the content reproduction apparatus recognizes that the calculation value and the right information check value do not coincide with each other, then it decides that the right information is in a rewritten state.

If the content reproduction apparatus decides that the right information is in a rewritten state, then it does not execute succeeding processes, and as a result, the content data are not reproduced. On the other hand, if the content reproduction apparatus decides that the right information is not in a rewritten state, then it executes a right presence/absence confirmation process for confirming whether or not the user of the content reproduction apparatus has the right to reproduce the content data based on the right information. If the content reproduction apparatus recognizes as a result of the right presence/absence confirmation process that the user has the right to reproduce the content data, then it executes a content reproduction process of reproducing the content data.

Consequently, with the content reproduction apparatus, after content data are acquired, even if right information coordinated with the content data is rewritten or falsified, for example, so as to increase the number of times by which the content data can be reproduced, the content reproduction apparatus can be controlled so as not to reproduce the content. Therefore, illegal utilization of the content data can be prevented to some degree.

However, the content reproduction apparatus has the following problem. In particular, it is assumed that the content reproduction apparatus legally acquires a large number of content data from a server of a content provider. Further, information stored in the data storage medium of the content reproduction apparatus (that is, the large number of content data, right information coordinated with the content data, right information check values for checking the right information, and software right processing modules for executing a process in which the predetermined calculation method is stored) is copied as it is into a data storage medium of a different content reproduction apparatus.

If such copying is performed skillfully, also the different content reproduction apparatus executes the process same as that of the content reproduction apparatus, for which the content data were acquired legally, in accordance with the copied software right processing module. As a result, the large number of content data can be reproduced also by the different content reproduction apparatus, and this damages the benefit to the copyright owners by whom the content data were created.

A technique for preventing such a situation as described above is disclosed in Japanese Patent Laid-open No. 2001-22271 (hereinafter refer to as Patent Document 1: this corresponds to European Patent Laid-open No. EP1120715 A1). According to the technique, a software right processing module of a content reproduction apparatus is implemented by hardware such as an IC (Integrated Circuit) and a circuit board. Further, a right information check value to be used in the right information rewriting check process described hereinabove is stored not in a data storage medium in which content data and right information are stored but in the right processing module implemented by the hardware. It is to be noted that, in the description given below, a right processing module implemented by hardware is referred to as hardware right processing module.

Where the technique is applied to a content reproduction apparatus, even if an operation of copying information stored in a data storage medium in the content reproduction apparatus (that is, acquired content data and coordinated right information) illegally into a different content reproduction apparatus, the right information check value stored in the hardware right processing module is not copied into the different content reproduction apparatus.

Therefore, even if a reproduction operation for reproducing the illegally copied content data is performed on the different content reproduction apparatus, the right information rewriting check process described above cannot be executed for the right information coordinated with the content data. Consequently, succeeding processes cannot be executed either. Therefore, reproduction of the content data can be prevented. Therefore, where the technique described above is adopted, illegal utilization of content data can be prevented more effectively than the first-described content reproduction apparatus.

Incidentally, where such a hardware right processing module as described above is implemented, a memory for storing a right information check value such as, for example, a nonvolatile memory is provided in the hardware right processing module.

In this instance, also in order to prevent the right information check value stored in the nonvolatile memory from leaking to the outside, preferably an operation of the nonvolatile memory is inhibited completely by confining the nonvolatile memory in the hardware right processing module or by a like means.

Actually, however, it is supposed that such measures as to embed a general-purpose nonvolatile memory, which is distributed widely, in the hardware right processing module may not be taken but that a general-purpose nonvolatile memory may be mounted on a circuit board which composes the hardware right processing module from a reason that the production cost of the hardware right processing module can be reduced or a like reason.

However, where a general-purpose nonvolatile memory is mounted on a circuit board which composes a hardware right processing module in this manner, it is possible to remove the nonvolatile memory from the circuit board and copy the right information check value stored in the nonvolatile memory into the nonvolatile memory of a different content reproduction apparatus. This gives rise to a problem that illegal utilization of content data cannot be prevented sufficiently.

Embodiments of the present invention seek to provide a signal processing circuit and a content control apparatus which can prevent illegal utilization of content data with a higher degree of certainty.

According to one aspect of the present invention, there is provided a signal processing circuit including a hardware module configured to control utilization of content data based on right information of the content data, and a nonvolatile memory configured to store a first check value for checking the compatibility of an apparatus identifier transferred from an apparatus in which the hardware module is incorporated and a second check value for checking the compatibility of the right information of the content data, the hardware module being operable to check the compatibility of the transferred apparatus identifier based on the apparatus identifier and the first check value stored in the memory, check the compatibility of the right information in response to the right information of the content data and the second check value stored in the memory and control the utilization of the content data based on the right information in response to results of the checks.

In the signal processing circuit, since the compatibility of the apparatus identifier is checked based on the apparatus identifier from the apparatus side and the first check value stored in the memory, such a situation that, for example, a reproduction process is executed for content data copied illegally from a different apparatus can be prevented. As a result, otherwise possible illegal utilization of content data can be prevented with a significantly high degree of certainty.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
FIG. 1 is a block diagram showing a configuration of a content reproduction apparatus according to an embodiment of the present invention;
FIG. 2 is a block diagram illustrating a concept of the content reproduction apparatus of FIG. 1;
FIG. 3 is a flow chart illustrating a processing procedure of a hardware right processing module shown in FIG. 1;
FIG. 4 is a diagrammatic view illustrating a manner (1) of preventing illegal utilization of content data by the content reproduction apparatus of FIG. 1; and
FIG. 5 is a diagrammatic view illustrating a manner (2) of preventing illegal utilization of content data by the content reproduction apparatus of FIG. 1.

### 1. Configuration of the Content Reproduction Apparatus

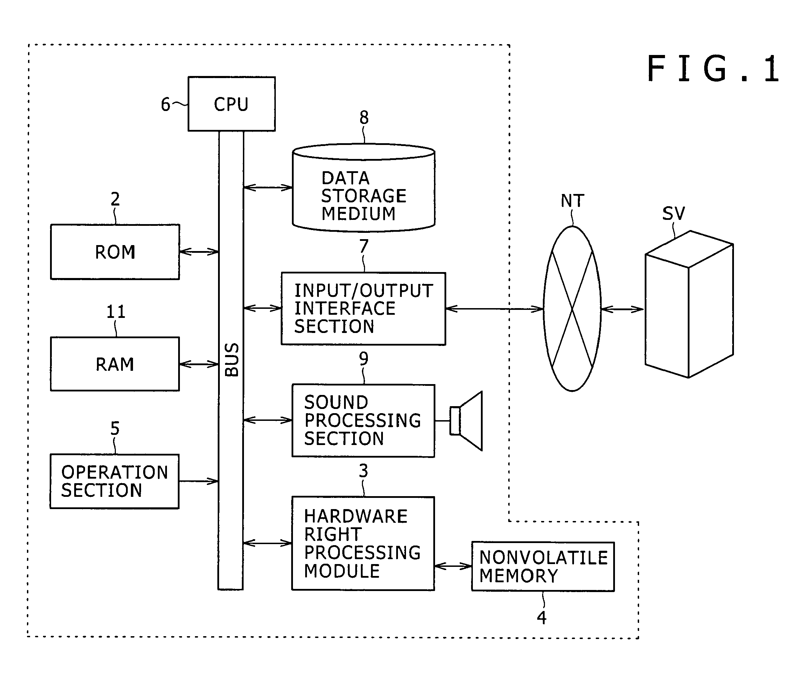

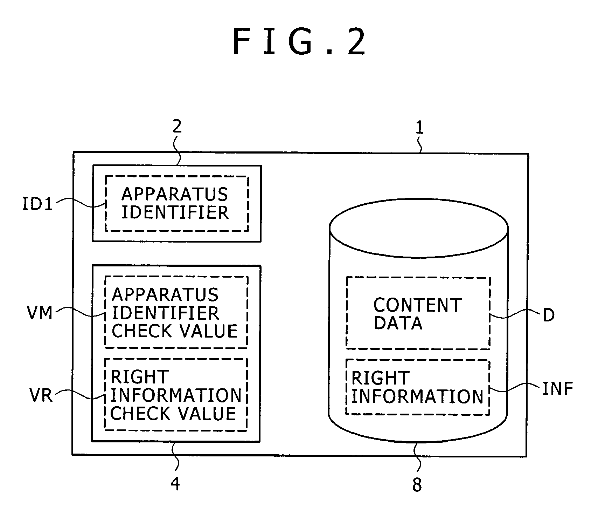

Referring first to FIGS. 1 and 2, there is shown a content reproduction apparatus to which the present invention is applied. The content reproduction apparatus is generally denoted by 1, and an apparatus identifier ID1 unique to the content reproduction apparatus 1 which does not overlap with that of any other content reproduction apparatus is stored in advance in a ROM (Read Only Memory) 2 which allows reading out of data therefrom but does not allow writing of data therein. Consequently, the apparatus identifier ID1 which is unique to the content reproduction apparatus 1 can be prevented from being rewritten by an operation of the content reproduction apparatus 1 from the outside. Incidentally, the apparatus identifier ID1 in the present embodiment may be, for example, a product number allocated uniquely to the content reproduction apparatus 1.

A hardware right processing module 3 is provided in the content reproduction apparatus 1 and executes a calculation for the apparatus identifier ID1 stored in the ROM 2 using a first calculation method which is, for example, a one-way function. The hardware right processing module 3 stores the calculated apparatus identifier check value VM in advance into a nonvolatile memory 4 connected to the hardware right processing module 3.

In this manner, in the present embodiment, a one-way function is applied as the first calculation method to be used for calculation of the apparatus identifier check value VM from the apparatus identifier ID1. According to the one-way function, it is easy to calculate a result from an argument, but it is difficult to determine the argument from the calculated result. Consequently, the situation that the apparatus identifier ID1 is determined from the apparatus identifier check value VM calculated by the first calculation method is prevented.

Further, in the present embodiment, for example, a storage device (register or the like) in which the first calculation method used for calculation of the apparatus identifier check value VM from the apparatus identifier ID1 is embedded in the hardware right processing module 3 to conceal the first calculation method in the hardware right processing module 3. In other words, the storage device is embedded in the hardware right processing module 3 in such a state that it is difficult also for the user of the content reproduction apparatus 1 to access. Consequently, even if the apparatus identifier ID1 stored in the ROM 2 is referred to by a third party, the value of the apparatus identifier check value VM can be prevented from being calculated based on the apparatus identifier ID1 referred to in this manner by the third party.

If a content acquiring operation for acquiring content data (for example, music data) D from a server SV of a content data provider is performed for an operation section 5 of the content reproduction apparatus 1 having such a configuration as described above, then a CPU (Central Processing Unit) 6 for controlling the entire content reproduction apparatus 1 transmits a content data requesting signal for requesting for provision of the content data D in accordance with the content acquiring operation to the server SV of the content data provider successively through an input/output interface section 7 and the Internet NT.

When the server SV of the content data provider receives the content data requesting signal from the content reproduction apparatus 1, it executes, for example, an accounting process for charging the user of the content reproduction apparatus 1 with a consideration for the provision of the content data D and transmits the content data D according to the content data requesting signal and right information INF, which represents that the user of the content reproduction apparatus has the right to utilize the content data D, to the content reproduction apparatus 1 through the Internet NT. Incidentally, the right information INF in this instance includes, for example, a license ID for identification of the right information, an electronic signature for preventing falsification of the right information, identification information representative of the validity of content data coordinated with the right information, and the number of times or the period of time/term by or within which the content data D can be reproduced.

The CPU 6 of the content reproduction apparatus 1 receives the content data D and the right information INF transmitted from the server SV through the input/output interface section 7 and stores the received content data D and right information INF into a data storage medium 8 which may be, for example, a hard disk driver. In this manner, the content reproduction apparatus 1 can legally acquire content data D according to a content acquiring operation of the user from the server SV of the content data provider.

After the content data D is legally acquired in this manner, the hardware right processing module 3 provided in the content reproduction apparatus 1 executes a calculation based on a second calculation method, which may be, for example, a one-way function, for the right information INF coordinated with the acquired content data D under the control of the CPU 6 to calculate a right information check value VR to be used to check whether or not the right information INF is in a rewritten state. The calculated right information check value VR is stored into the nonvolatile memory 4 in which the apparatus identifier check value VM is stored.

In this manner, in the present embodiment, a one-way function is applied as the second calculation method to be used for calculation of the right information check value VR from the right information INF. Consequently, the right information INF can be prevented from being determined from the right information check value VR calculated by the second calculation method.

Further, in the present embodiment, a storage device (register or the like) in which the second calculation method to be used for the calculation of the right information check value VR from the right information INF is embedded in the hardware right processing module 3 so that the second calculation method is concealed in the hardware right processing module 3. Consequently, even if the right information INF stored in the data storage medium 8 is referred to by a third party, the value of the right information check value VR can be prevented from being calculated based on the right information INF referred to.

Furthermore, in the present embodiment, the apparatus identifier check value VM and the right information check value VR which cannot be calculated by a third party are stored in the nonvolatile memory 4 in accordance with data arrangement (data format) which can be known, for example, only to a manufacturer side by which the content reproduction apparatus 1 was manufactured. Therefore, it is very difficult for third parties including the user to specify at what places the apparatus identifier check value VM and the right information check value VR are stored in a storage area of the nonvolatile memory 4. Thus, such a situation that, for example, only the right information check value VR from between the apparatus identifier check value VM and the right information check value VR stored in the nonvolatile memory 4 is read out separately from the apparatus identifier check value VM and copied into a nonvolatile memory of a different content reproduction apparatus can be prevented.

Thereafter, every time the power is turned on, for example, in response to a power turning on operation of the user, the hardware right processing module 3 of the content reproduction apparatus 1 executes a right information validity check process for deciding whether or not the right information check value VR stored in the nonvolatile memory 4 is a legal one calculated by the content reproduction apparatus 1 under the control of the CPU 6.

In particular, in the right information validity check process, the hardware right processing module 3 of the content reproduction apparatus 1 executes a calculation for the apparatus identifier ID1 stored in the ROM 2 of the content reproduction apparatus 1 using the first calculation method.

Thereafter, the hardware right processing module 3 compares the value obtained by the calculation (the value is hereinafter referred to as first calculated value) with the apparatus identifier check value VM stored in the nonvolatile memory 4. Then, if the hardware right processing module 3 recognizes as a result of the comparison that the first calculated value and the apparatus identifier check value VM coincide with each other, then it decides that the apparatus identifier ID1 stored in the ROM 2 and the apparatus identifier check value VM match with each other. As a result, the hardware right processing module 3 decides that the right information check value VR stored such that it may not be read out separately from the apparatus identifier check value VM is a legal one calculated when the content reproduction apparatus 1 acquires the content data D.

On the other hand, if the hardware right processing module 3 recognizes as a result of the comparison described above that the first calculated value and the apparatus identifier check value VM do not coincide with each other, then it decides that the apparatus identifier ID1 stored in the ROM 2 and the apparatus identifier check value VM do not match with each other. As a result, the hardware right processing module 3 decides that the right information check value VR stored in such a manner as not to be read out separately from the apparatus identifier check value VM is an illegal one, for example, copied from a different content reproduction apparatus.

When the hardware right processing module 3 decides that the right information check value VR is an illegal one, it does not execute a right information rewriting check process of checking whether or not the right information INF is in a rewritten state using the right information check value VR and does not execute succeeding processes. Thus, in this instance, also the content reproduction process of reproducing the content data D coordinated with the right information INF is not executed.

On the other hand, if the hardware right processing module 3 decides that the right information check value VR is a legal one, then it executes the right information rewriting check process of checking whether or not the right information INF coordinated with the content data D is in a rewritten state using the right information check value VR when a reproduction operation for reproducing the operation section 5 is performed through the operation section 5 by the user.

In particular, in the right information rewriting check process, the hardware right processing module 3 executes a calculation for the right information INF coordinated with the content data D using the second calculation method.

Thereafter, the hardware right processing module 3 compares the value calculated by the calculation (the value is hereinafter referred to as second calculated value) with the right information check value VR decided to be legal in the right information validity check process described hereinabove. If the hardware right processing module 3 recognizes as a result of the comparison that the second calculated value and the right information check value VR do not coincide with each other, then it decides that the right information INF and the right information check value VR do not match with each other and consequently decides that the right information INF is in a rewritten state.

On the other hand, if the hardware right processing module 3 recognizes as a result of the comparison described above that the second calculated value and the right information check value VR coincide with each other, then it decides that the right information INF and the right information check value VR match with each other. As a result, the hardware right processing module 3 decides that the right information INF is not in a rewritten state.

When the hardware right processing module 3 decides that the right information INF is not in a rewritten state, it executes a right presence/absence confirmation process of confirming whether or not the user of the content reproduction apparatus 1 has the right to reproduce the content data D based on the right information INF.

In particular, in the right presence/absence confirmation process, the hardware right processing module 3 decides from the right information INF that the user of the content reproduction apparatus 1 has the right to reproduce the content data D, for example, if it is recognized that the right information is not in a falsified state from the electronic signature, that the content data is acquired legally based on the identification information representative of the validity of the content data, that the number of times by which the content data D can be reproduced is indicated as one or more or that the present point of time is within the period of time/term within which reproduction of the content data D is permitted. On the other hand, the hardware right processing module 3 decides based on the right information INF that the user of the content reproduction apparatus 1 does not have the right to reproduce the content data D, for example, if it is recognized that the right information is in a falsified state from the electronic signature, that the content data is acquired illegally based on the identification information representative of the validity of the content data, that the number of times by which the content data D can be reproduced is indicated as zero or recognizes that the present point of time is outside the period of time/term within which reproduction of the content data D is permitted.

If the hardware right processing module 3 decides that the user of the content reproduction apparatus 1 does not have the right to reproduce the content data D, then it does not execute the content reproduction process of reproducing the content data D.

On the other hand, if the hardware right processing module 3 decides that it has the right to reproduce the content data D, then it executes a content reproduction process, for example, of decompressing and decrypting the data which is in a compressed and encrypted state. Then, the hardware right processing module 3 signals a sound signal obtained by the content reproduction process to a sound processing section 9. Consequently, the sound processing section 9 outputs sound based on the sound signal from the hardware right processing module 3 from a speaker 10 under the control of the CPU 6.

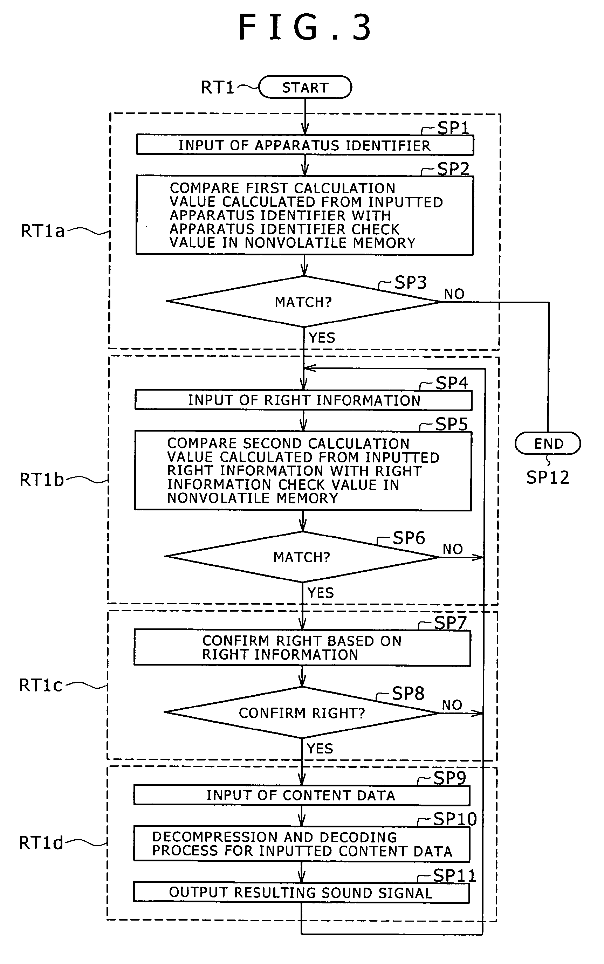

Now, a processing procedure RT1 of the hardware right processing module 3 provided in the content reproduction apparatus 1 is described in detail with reference to a flow chart shown in FIG. 3.

Incidentally, the processing procedure RT1 of the hardware right processing module 3 includes a right information validity checking process procedure RT1a (steps SP1 to SP3), a right information rewriting checking process procedure RT1b (steps SP4 to SP6), a right presence/absence confirmation process procedure RT1c (steps SP7 to SP8) and a content reproduction process procedure RT1d (steps SP9 to SP11). The right information validity checking process procedure RT1a is for checking whether or not the right information check value VR stored in the nonvolatile memory 4 of the content reproduction apparatus 1 is a legal one which is not copied illegally from a different content processing apparatus. The right information rewriting checking process procedure RT1b is for checking whether or not the right information INF is in a rewritten state using the right information check value VR when it is decided by the right information validity checking process procedure RT1a that the right information check value VR is legal. The right presence/absence confirmation process procedure RT1c is for confirming whether or not the user of the content reproduction apparatus 1 has the right to reproduce the content data D based on the right information INF when it is decided by the right information rewriting checking process procedure RT1b that the right information INF is not in a rewritten state. The content reproduction process procedure RT1d is for reproducing the content data D when it is confirmed by the right presence/absence confirmation process procedure RT1c that the user of the content reproduction apparatus 1 has the right to reproduce the content data D. The process procedures are described in detail below.

After the content reproduction apparatus 1 is started, for example, in response to a power turning on operation for turning on the power supply of the content reproduction apparatus 1, the apparatus identifier ID1 read out from the ROM 2 by the CPU 6 is inputted to the hardware right processing module 3 at step SP1.

In response to the input of the apparatus identifier ID1, the hardware right processing module 3 executes a calculation for the inputted apparatus identifier ID1 using the first calculation method and compares a first calculated value obtained by the calculation with the apparatus identifier check value VM stored in the nonvolatile memory 4 at step SP2.

The hardware right processing module 3 thereafter advances the processing to step SP3, at which it receives a result of the comparison at step SP2 and decides whether or not the inputted apparatus identifier ID1 and the apparatus identifier check value VM match with each other.

If an affirmative result is obtained at step SP3, then this signifies that the apparatus identifier ID1 and the apparatus identifier check value VM match with each other. At this time, the hardware right processing module 3 of the content reproduction apparatus 1 decides that the right information check value VR stored in such a manner as not to be read out separately from the apparatus identifier check value VM is a legal one calculated upon acquisition of the content data D by the content reproduction apparatus 1. As a result, the hardware right processing module 3 advances the processing to step SP4.

On the other hand, if a negative result is obtained at step SP3, then this signifies that the apparatus identifier ID1 and the apparatus identifier check value VM do not match with each other. At this time, the hardware right processing module 3 of the content reproduction apparatus 1 decides that the right information check value VR stored in such a manner as not to be read out separately from the apparatus identifier check value VM is an illegal one, for example, copied illegally from a different reproduction apparatus. As a result, the hardware right processing module 3 advances the processing to step SP12, at which it ends the processing procedure RT1.

At step SP4, when a reproduction operation to reproduce the content data D is performed through the operation section 5 by the user, the right information INF coordinated with the content data D is read out from the data storage medium 8 by CPU 6 and inputted to the hardware right processing module 3.

In response to the right information INF, the hardware right processing module 3 executes a calculation for the inputted right information INF using the second calculation method and then compares, at step SP5, a second calculated value obtained by the calculation with the right information check value VR decided to be legal in the right information validity checking process procedure RT1a.

Then, the hardware right processing module 3 advances the processing to step SP6, at which it decides based on the result of the comparison at step SP5 whether or not the inputted right information INF and the right information check value VR match with each other.

If an affirmative result is obtained at step SP6, then this signifies that the right information INF and the right information check value VR match with each other. At this time, the hardware right processing module 3 of the content reproduction apparatus 1 decides that the right information INF is not in a rewritten state. As a result, the processing advances to step SP7.

On the other hand, if a negative result is obtained at step SP6, then this signifies that the right information INF and the right information check value VR do not match with each other. At this time, the hardware right processing module 3 of the content reproduction apparatus 1 decides the right information INF is in an illegally rewritten state. Therefore, the hardware right processing module 3 does not reproduce the content data D coordinated with the right information INF but, for example, returns the processing to step SP4, at which it waits that a new reproduction operation is performed by the user.

At step SP7, the hardware right processing module 3 confirms, based on the right information INF which is decided by the right information rewriting checking process procedure RT1b that it is not in a rewritten state, whether or not the user of the content reproduction apparatus 1 has the right to reproduce the content data D.

Then, the hardware right processing module 3 advances the processing to step SP8, at which it decides based on a result of the confirmation at step SP7 whether or not the user of the content reproduction apparatus 1 has the right to reproduce the content data D.

If an affirmative result is obtained at step SP8, then the hardware right processing module 3 decides that the user of the content reproduction apparatus 1 has the right to reproduce the content data D, and advances the processing to step SP9. At step SP8, an affirmative result is obtained if it is recognized that the right information is not in a falsified state based on the electronic signature, that the content data is acquired legally based on the identification information representative of the validity of the content data, that the number of times by which the content data D can be reproduced is indicated as one or more or that the present point of time is within the period of time/term within which reproduction of the content data D is permitted.

On the other hand, if a negative result is obtained at step SP8, then the hardware right processing module 3 decides that the user of the content reproduction apparatus 1 does not have the right to reproduce the content data D. As a result, the hardware right processing module 3 does not reproduce the content data D but, for example, advances the processing to step SP4, at which it waits that a new reproduction operation is performed by the user. At step SP8, a negative result is obtained if it is recognized that the right information is in a falsified state from the electronic signature, that the content data is acquired illegally based on the identification information representative of the validity of the content data, that the number of times by which the content data D can be reproduced is indicated as zero or recognizes that the present point of time is outside the period of time/term within which reproduction of the content data D is permitted.

At step SP9, the data with regard to which it is decided by the right presence/absence confirmation process procedure RT1c that the user of the content reproduction apparatus 1 has the right to reproduce are read out from the data storage medium 8 by the CPU 6 and inputted to the hardware right processing module 3.

In response to the input of the content data D, the hardware right processing module 3 performs a decompression and decryption process for the content data D inputted thereto at step SP10.

At step SP11, the hardware right processing module 3 outputs a sound signal obtained by the decompression and decryption process at step SP10 to the sound processing section 9. Thus, the sound processing section 9 emits sound based on the sound signal through the speaker 10 under the control of the CPU 6.

As described above, the content reproduction apparatus 1 shown in FIGS. 1 and 2 includes the ROM 2 which stores the apparatus identifier ID1 for identifying the content reproduction apparatus 1 such that it cannot be rewritten.

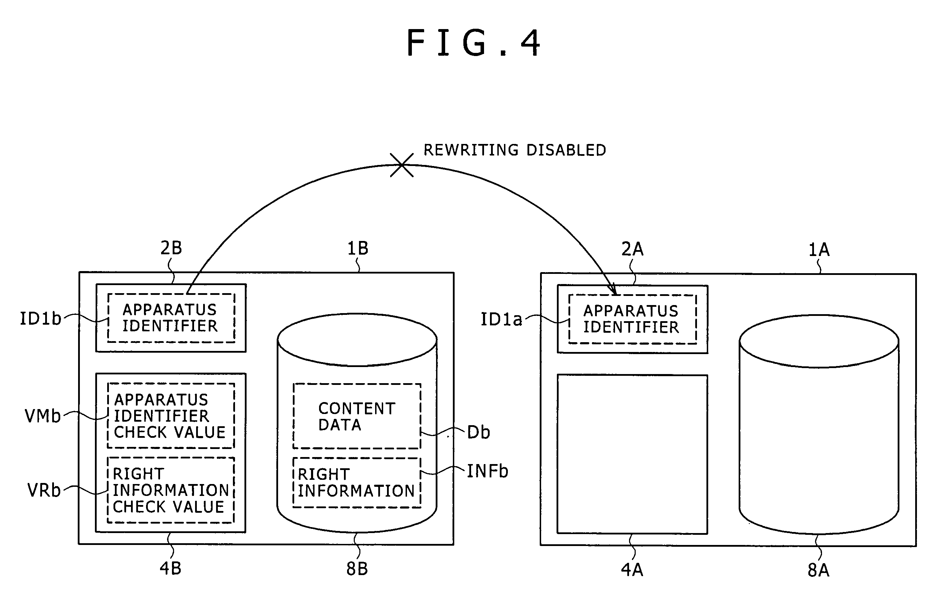

Consequently, for example, as seen in FIG. 4, such a situation that the apparatus identifier ID1a stored in the ROM 2A of a first content reproduction apparatus 1A is rewritten with the apparatus identifier ID1b stored in the ROM 2B of a second content reproduction apparatus 1B can be prevented.

Further, the content reproduction apparatus 1 shown in FIGS. 1 and 2 includes the data storage medium 8 for storing content data D acquired from the server SV and right information INF indicative of whether or not the user of the content reproduction apparatus 1 has the right to reproduce the content data D.

The content reproduction apparatus 1 shown in FIGS. 1 and 2 includes the nonvolatile memory 4 which stores the right information check value VR for being used to check whether or not the right information INF coordinated with the content data D is in a rewritten state and the apparatus identifier check value VM coordinated with the apparatus identifier ID1 stored in the ROM 2 of the content reproduction apparatus 1 such that they cannot be read out separately from each other.

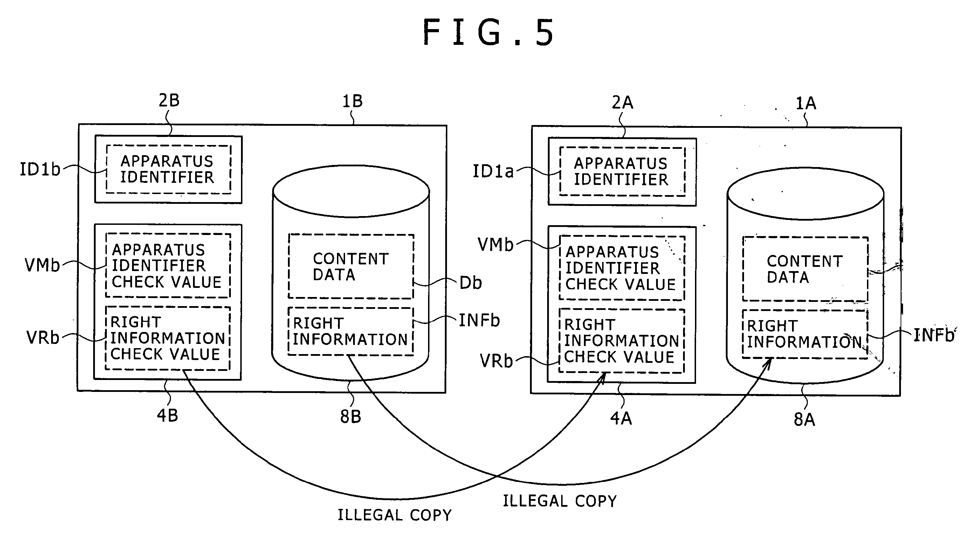

Consequently, if, for example, as seen in FIG. 5, it is tried to copy content data Db acquired legally by the second content reproduction apparatus 1B, right information INFb of the content data Db and right information check value VRb for being used to check the right information INFb from the second content reproduction apparatus 1B into the first content reproduction apparatus 1A, then also the apparatus identifier check value VMb stored in the nonvolatile memory 4B is copied from the second content reproduction apparatus 1B into the first content reproduction apparatus 1A together with the right information check value VRb.

Further, the hardware right processing module 3 of the content reproduction apparatus 1 shown in FIGS. 1 and 2 decides whether or not the apparatus identifier check value VM stored in the nonvolatile memory 4 is coordinated with the apparatus identifier ID1 stored in the ROM 2 of the content reproduction apparatus 1. If a result of the decision indicates that the apparatus identifier ID1 and the apparatus identifier check value VM are coordinated with each other, then the hardware right processing module 3 executes the right information rewriting checking process procedure RT1b for checking whether or not the right information INF is in a rewritten state using the right information check value VR stored such that it cannot be read out separately from the apparatus identifier check value VM. In this instance, if the apparatus identifier ID1 and the apparatus identifier check value VM are not coordinated with each other, then the hardware right processing module 3 executes the right information rewriting checking process procedure RT1b for checking whether or not the right information INF is in a rewritten state using the right information check value VR stored such that it cannot be read out separately from the apparatus identifier check value VM.

Consequently, in the example illustrated in FIG. 5, since the apparatus identifier check value VMb copied from the nonvolatile memory 4B of the second content reproduction apparatus 1B into the nonvolatile memory 4A of the first content reproduction apparatus 1A is not coordinated with the apparatus identifier ID1a stored in the ROM 2A of the first content reproduction apparatus 1A, the first content reproduction apparatus 1A does not execute the right information rewriting checking process procedure RT1b using the right information check value VRb copied without being separated from the apparatus identifier check value VMb. As a result, the first content reproduction apparatus 1A does not execute the right presence/absence confirmation process RT1c and the content reproduction process RT1d later than the right information rewriting checking process procedure RT1b, such a situation that the content data Db copied illegally from the second content reproduction apparatus 1B into the first content reproduction apparatus 1A are reproduced can be prevented.

Thus, with the content reproduction apparatus 1 shown in FIGS. 1 and 2, illegal utilization of the content data D can be prevented with a significantly high degree of certainty.

It is to be noted that the hardware right processing module 3 in the present embodiment includes a DSP (Digital Signal Processor) which executes various processes in accordance with firmware read out from the data storage medium 8, a memory, a register and so forth which are mounted on a circuit board and connected suitably. Further, the nonvolatile memory 4 connected to the hardware right processing module 3 may be mounted on the circuit board which composes the hardware right processing module 3 or may alternatively be provided outside the circuit board.

Further, to the first calculation method and the second calculation method, for example, a check sum method, a CRC (Cyclic Redundancy Check) method, an MD5 (Message Digest 5) method, a hash function method such as a SHA1 (Secure Hash Algorithm 1) method, a HMAC (Keyed Hashing for Message Authentication Code)-MD5 method in which a particular key is used, an HMAC-SHA1 method, an ECDSA (Elliptic Curve Digital Signature Algorithm) method, and so forth can be applied.

### 2. Other Embodiments

It is to be noted that, while, in the embodiment described hereinabove, for example, sound data is applied as the content data D to be used by a user, according to the present invention, the content data D is not limited to this, but various other data such as character information, video data, image data and programs can be applied.

Further, while, in the embodiment described hereinabove, the product number of the content reproduction apparatus 1 is applied as the apparatus identifier ID unique to the content reproduction apparatus 1, according to the present invention, the apparatus identifier ID is not limited to this, but a physical address allocated uniquely to the input/output interface section 7 (for example, an NIC (Network Interface Card) or a like number may be applied.

Further, while, in the embodiment described hereinabove, the CPU 6 which executes various processes in accordance with a program developed in the RAM 11 is applied as a control section for controlling the hardware right processing module 3 and so forth, according to the present invention, the control section is not limited to this, but an MPU (Micro Processing Unit) or the like may be applied.

Further, in addition to the example of the right information INF in the embodiment described hereinabove which indicates whether or not the content reproduction apparatus 1 has the right to utilize the content data D, the right information INF may otherwise indicate, for example, a number of times by which a checkout of outputting the content data D so as to be lent to a different apparatus can be performed or a number of times by which the content data D can be copied to a different apparatus.

Further, in the embodiment described hereinabove, where the right information INF indicates that the user of the content reproduction apparatus 1 has the right to utilize the content data D, the content reproduction apparatus 1 executes the content reproduction process procedure RT1d for reproducing the content data D. However, the present invention is not limited to this, but the content reproduction apparatus 1 may otherwise execute any process which allows the content data D to be utilized by the user and, for example, may execute a checkout process of outputting the content data D so as to be lent to a different apparatus, a copying process of copying the content data D to a different apparatus or a like process.

Further, in the embodiment described hereinabove, the apparatus identifier check value VM calculated using the first calculation method from the apparatus identifier ID1 stored in the ROM 2 is applied as the data to be stored such that it cannot be read out separately from the right information check value VR. However, according to the present invention, the data is not limited to this, but various other data can be applied only if the data are coordinated with the apparatus identifier ID1 stored in the ROM 2 such as, for example, the apparatus identifier ID1 itself stored in the ROM 2 or a value calculated using some other method from the apparatus identifier ID1 stored in the ROM 2.

Further, in the embodiment described hereinabove, the method wherein the content data D is acquired from the server SV of a content provider through the Internet NT is applied as the method of acquisition of the content data D by the content reproduction apparatus 1. However, according to the present invention, the method is not limited to this, but, for example, a method wherein data stored in a data storage medium such as a CD (Compact Disk), a DVD (Digital Versatile Disk), a Blu-ray Disk or an HD-DVD (High Definition DVD) are read out and acquired or a like may be applied.

Further, in the embodiment described hereinabove, the hardware right processing module 3 and the nonvolatile memory 4 which is provided on or outside the circuit board which composes the hardware right processing module 3 are applied as a signal processing circuit. However, according to the present invention, the signal process circuit is not limited to this, but various other configurations can be applied to the signal processing circuit.

Furthermore, in the embodiment described hereinabove, such a hardware right processing module 3 as shown in FIG. 1 and so forth is utilized as the hardware module for controlling the utilization of the content data D based on the right information INF. However, according to the present invention, the hardware module is not limited to this, but various other configurations can be applied to the hardware module.

Further, in the embodiment described hereinabove, the nonvolatile memory 4 shown in FIG. 1 and so forth is applied as the nonvolatile memory for storing the first check value (apparatus identifier check value VM) for checking the compatibility of the apparatus identifier ID1 transferred from an apparatus (content reproduction apparatus 1) in which a hardware module is mounted and the second check value (right information check value VR) for checking the compatibility of the right information INF relating to the content data D. However, according to the present invention, the nonvolatile memory is not limited to this, but various storage devices can be applied only if they can store the apparatus identifier check value VM and the right information check value VR such that they cannot be read out separately from each other.

Further, in the embodiment described hereinabove, the hardware right processing module 3 reads out firmware (program) stored in the data storage medium 8 and executes the processing procedure RT1 illustrated in FIG. 3 in accordance with the thus read out firmware. However, the present invention is not limited to this, but various other apparatus may execute the processing procedure RT1. Embodiments provide a signal processing circuit and apparatus which can prevent illegal utilization of content data with a higher degree of certainty. A hardware module controls utilization of content data based on right information of the content data. A nonvolatile memory stores a first check value for checking the compatibility of an apparatus identifier transferred from an apparatus in which the hardware module is incorporated and a second check value for checking the compatibility of the right information of the content data. The hardware module checks the compatibility of the transferred apparatus identifier based on the apparatus identifier and the first check value, checks the compatibility of the right information in response to the right information and the second check value and controls the utilization of the content data based on the right information in response to results of the checks.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A signal processing circuit, comprising:
a hardware module configured to control utilization of content data based on right information of the content data; and
a nonvolatile memory configured to store a first check value for checking the compatibility of an apparatus identifier transferred from an apparatus in which said hardware module is incorporated and a second check value for checking the compatibility of the right information of the content data;
said hardware module being operable to check the compatibility of the transferred apparatus identifier based on the apparatus identifier and the first check value stored in said memory, check the compatibility of the right information in response to the right information of the content data and the second check value stored in said memory and control the utilization of the content data based on the right information in response to results of the checks.

2. The signal processing circuit according to claim 1, wherein said hardware module checks the compatibility of the transferred apparatus identifier in response to the apparatus identifier and the first check value stored in said memory when said apparatus is stared up.

3. The signal processing circuit according to claim 1, wherein said hardware module and said memory are formed on the same semiconductor substrate.

4. The signal processing circuit according to claim 1, wherein said hardware module executes a content reproduction process of reproducing the content data as the process of controlling the utilization of the content data based on the right information.

5. A content control apparatus, comprising:
a hardware module configured to control utilization of content data based on right information of the content data;
a first nonvolatile memory configured to store an apparatus identifier; and
a second nonvolatile memory configured to store a first check value for checking the compatibility of the apparatus identifier and a second check value for checking the compatibility of the right information of the content data;
said hardware module being operable to check the compatibility of the apparatus identifier stored in said first nonvolatile memory in response to the apparatus identifier and the first check value stored in said second nonvolatile memory, check the comparability of the right information in response to the right information of the content data and the second check value stored in said second nonvolatile memory and control the utilization of the content data based on the right information in response to a result of the check.

6. The content control apparatus according to claim 5, wherein said hardware module checks the compatibility of the apparatus identifier in response to the apparatus identifier stored in said first nonvolatile memory and the first check value stored in said second nonvolatile memory when said content control apparatus is started up.

7. The content control apparatus according to claim 5, wherein said hardware module and said second nonvolatile memory are formed on the same semiconductor substrate.

8. The content control apparatus according to claim 5, wherein said hardware module executes a content reproduction process of reproducing the content data as the process of controlling the utilization of the content data based on the right information.

9. A content control method for a hardware module configured to control utilization of content data based on right information of the content data, comprising:
a first step of checking the compatibility of an apparatus identifier transferred from an apparatus in which said hardware module is incorporated in response to the apparatus identifier and a first check value stored in a nonvolatile memory;
a second step of checking the compatibility of the right information in response to the right information of the content data and a second check value stored in said memory in response to a result of the check at the first step; and
a third step of controlling the utilization of the content data based on the right information in response to a result of the check at the second step.

10. The content control method according to claim 9, wherein, at the first step, the compatibility of the apparatus identifier is checked in response to the transferred apparatus identifier and the first check value stored in said memory when said apparatus is started up.

11. The content control method according to claim 9, wherein, at the third step, a content reproduction process of reproducing the content data is executed as the process of controlling the utilization of the content data based on the right information.

12. A content control method for a content control apparatus which includes a hardware module configured to control utilization of content data based on right information of the content data, comprising:
a first step of checking the compatibility of an apparatus identifier stored in a first nonvolatile memory provided in said content control apparatus based on the apparatus identifier and a first check value stored in a second nonvolatile memory provided in said content control apparatus;
a second step of checking the comparability of the right information in response to the right information of the content data and a second check value stored in said second nonvolatile memory in response to a result of the check at the first step; and
a third step of controlling the utilization of the content data based on the right information in response to a result of the check at the second step.

13. The content control method according to claim 12,
wherein, at the first step, the compatibility of the apparatus identifier is checked in response to the apparatus identifier stored in said first nonvolatile memory and the first check value stored in said second nonvolatile memory when said apparatus is started up.

14. The content control method according to claim 12, wherein, at the third step, a content reproduction process of reproducing the content data is executed as the process of controlling the utilization of the content data based on the right information.

15. A storage medium in or on which a content control program is stored, the control program causing a hardware module, which is configured to control utilization of content data based on right information of the content data, to execute:
a first step of checking the compatibility of an apparatus identifier transferred from an apparatus in which said hardware module is incorporated in response to the apparatus identifier and a first check value stored in a nonvolatile memory;
a second step of checking the compatibility of the right information in response to the right information of the content data and a second check value stored in said memory in response to a result of the check at the first step; and
a third step of controlling the utilization of the content data based on the right information in response to a result of the check at the second step.

16. A storage medium in or on which a content control program is stored, the control program causing a content control apparatus, which includes a hardware module configured to control utilization of content data based on right information of the content data, to execute:
a first step of checking the compatibility of an apparatus identifier stored in a first nonvolatile memory provided in said content control apparatus based on the apparatus identifier and a first check value stored in a second nonvolatile memory provided in said content control apparatus;
a second step of checking the comparability of the right information in response to the right information of the content data and a second check value stored in said second nonvolatile memory in response to a result of the check at the first step; and
a third step of controlling the utilization of the content data based on the right information in response to a result of the check at the second step.
